# EUROPEAN PATENT SPECIFICATION

(11) **EP 0 582 160 B1**
(45) Date of publication and mention of the grant of the patent: **07.04.1999**
(21) Application number: 93111893.9
(22) Date of filing: 24.07.1993
(51) Int. Cl.: B29D 24/00, B29C 43/36

(54) **System for the manufacturing of carbon fibre structures and relevant manufacturing process, suitable for aeronautic applications**
Anlage zur Herstellung von kohlefaserverstärkten Strukturen und Verfahren zur Herstellung, für Anwendungen im aeronautischen Bereich
Système pour la fabrication de structures renforcées par des fibres de carbone et procédé pour la fabrication, pour les applications aéronautiques

(30) Priority: 03.08.1992 IT RM920590
(43) Date of publication of application: 09.02.1994
(73) Proprietor: FINMECCANICA S.p.A., 00195 Roma (IT)
(72) Inventor: Inserra Imparato, Sabato, I-80054 Gragnano (Napoli) (IT)
(74) Representative: Gustorf, Gerhard, Dipl.-Ing.

(56) References cited:
- WO-A-85/02365
- WO-A-90/01410
- DE-A- 1 953 986
- US-A- 3 641 230
- US-A- 4 389 367

## Description

The invention relates to a method for the manufacturing of integral monolithic structures, utilising a polymeric matrix material reinforced by fibres and pre-impregnated with thermosetting resins, wherein the layers of said material, separated by supporting elements, are positioned in a mould and enveloped in a bag to which a vacuum is applied.

Such a method is known by WO 90/01410. In this known method a series of hollow, air-filled plastic bodies is inserted between composite parts, i.e. a lower layer and an upper layer; this structure, together with the uncovered mould, is then closed by the bag to which a vacuum is applied during the polymerisation process. Under the effect of the vacuum the hollow bodies adhere to the layers and flatten, creating inner cavities in the composite components. The shape of the inner cavity is determined by the shape that the hollow tube bodies assume under the effect of the vacuum application. Furthermore, the external shape of the parts at least on the upper side is given by the bag itself. Moreover, the shape of the inner cavity depends on the stiffness of the plastic hollow bodies that changes significantly during the process as the temperature changes. Therefore it is difficult to obtain repeatable and controllable geometry. On the other side only certain shapes may be obtained by flattening of the cilindrical hollow bodies.

According to the invention, these drawbacks are avoided by the fact that the structure is formed in a female mould closed at its lower, upper and lateral sides, and that as supporting elements rigid plugs are used which are extracted after having applied vacuum to the structure that is subsequently moved to the polymerisation process.

In this new process, the complete outside surface is precisely formed against the mould. The inner plugs act only as supporting elements of the inner bags and of the material that envelope the inner cavities. Since the plugs are external to the envelope bag, they do not interfere with the application of pressure on the part, that is compacted only by the effect of the envelope bag which forms the parts against the female tool. Moreover, with the process of the invention pratically any shape can be obtained for the inner cavities just providing inner plugs with the desired shape.

The invention introduces a simplification to the manufacturing process and is particularly advantageous in the field of aeronautical, naval and rail constructions, stand structures, military field equipment (bridges, roads), medical equipment structures, car industry and wherever there is a requirement for low weight, high structural efficiency and high quality standards.

It is known fact that aircraft adopt materials and structures which have to be lightweight and strong at the same time. For the manufacturing of such structures, the use of composite materials with thermosetting matrix has become widely popular. In particular, the integral composite structures have proved to be very efficient.

In recent years, a technique for the manufacturing of thermosetting composite structural parts had been commonly adopted. This manufacturing method cosisted in forming layers of carbon fibres, glass fibres etc, pre-impregnated with thermosetting resins, onto a forming tool.

To tighten the layers together and to confer the required shape, the layers were closed between the surface of the shaping tool and an external flexible container, known as vacuum bag.

The adoption of composite structural parts for aeronautical and other applications gives way to wide benefits in terms of manufacturing cost savings and quality improvements, due to the possibility to manufacture integral boxed structures, in one shot, even with strengthening elements, spars, which join the two surfaces of the structure (Figure 12).

This manufacturing process was till now performed by adopting complex layer forming equipment, which was often expensive to manufacture and required long heating times for polymerisation, while not ensuring a uniform distribution of pressure over the entire surface during the polymerisation process.

Uniform application of pressure is therefore the most difficult aspect of the previous techniques and is therefore the subject for which this patent application is relevant.

This invention in fact regards a system which can apply distributed pressure over the box structure, while consisting of an upper and lower plate and lateral supports (Figure 3) for predictable and uniform manufacturing of these elements in carbon fibre or similar materials.

There derives a simplified system in terms of manufacturing facilities, mostly due to the elimination of rigid or semi-rigid elements which were adopted by the previous technique and which could not assure uniform application of pressure to the layers of carbon fibre during the process.

The following figures are attached:
Fig. 1 - Pre-formed spar.
Fig. 2 - Schematic outline of the auxiliary supports on the forming tool base plate.
Fig. 3 - Schematic diagram of the forming tool with supporting elements.
Fig. 4 - Supporting element with tubular bag.
Fig. 5 - Tubular bag.
Fig. 6 - Section of the tubular bag and supporting element.
Fig. 7 - Position of the semi-spars.
Fig. 8 - Section of the supporting elements with semi-spars in position.
Fig. 9 - Upper (8) and lower (4) closing covers of the tool.
Fig. 10 - Final bag assembly.
Fig. 11 - Schematic drawing of the pressure distribution.
Fig. 12 - Boxed structure with reinforcing elements (spars).

For a better understanding of the invention, the details of the drawings will now be given.

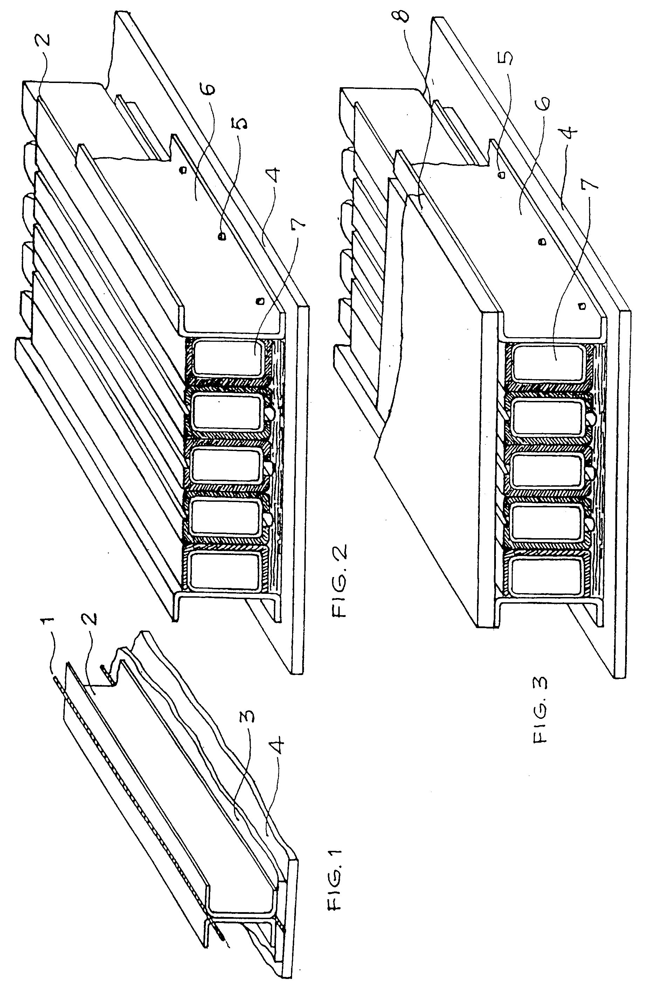

Fig. 1, which shows the pre-formed spars, includes:
   1 filler;
   2 preformed semi-spar;
   3 lower pre-plied skin;
   4 tool base plate.
Fig. 2 shows the supporting elements on the tool auxiliary plates and includes:
   5 fixing elements of side plates 6;
   6 side plates;
   7 supporting elements.
Fig. 3, which shows the forming tool with supporting elements, includes:
   5 fixing elements of lateral supports 6;
   4 forming tool base plate;
   6 lateral supports;
   7 supporting elements;
   8 upper closing cover of the tool.
Fig. 4, which shows the supporting element with the tubular bag, includes:
   7 supporting element;
   11 tubular bag;
   B-B indicates the section of the assembly shown in Fig. 6.
Figure 5, which represents the tubular bag, includes:
   14 vacuum application valve;
   15 sealing of the bag.
Fig. 6, which shows a section of the tubular bag and of the supporting element, includes:
   7 supporting element;
   10 film (internal separator);
   11 tubular bag;
   12 breathing material;
   13 external parting film;
   14 vacuum application valve.

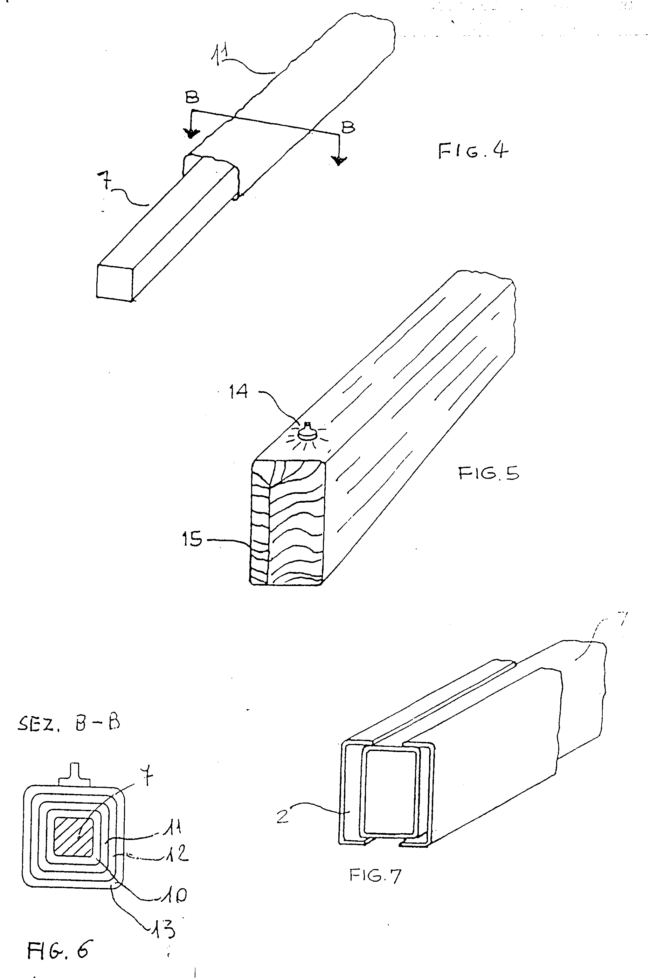

Fig. 7, which shows the position of the semi-spars, includes:
   2 pre-formed semi-spars;
   7 supporting element covered by the layers, as per Fig. 6.

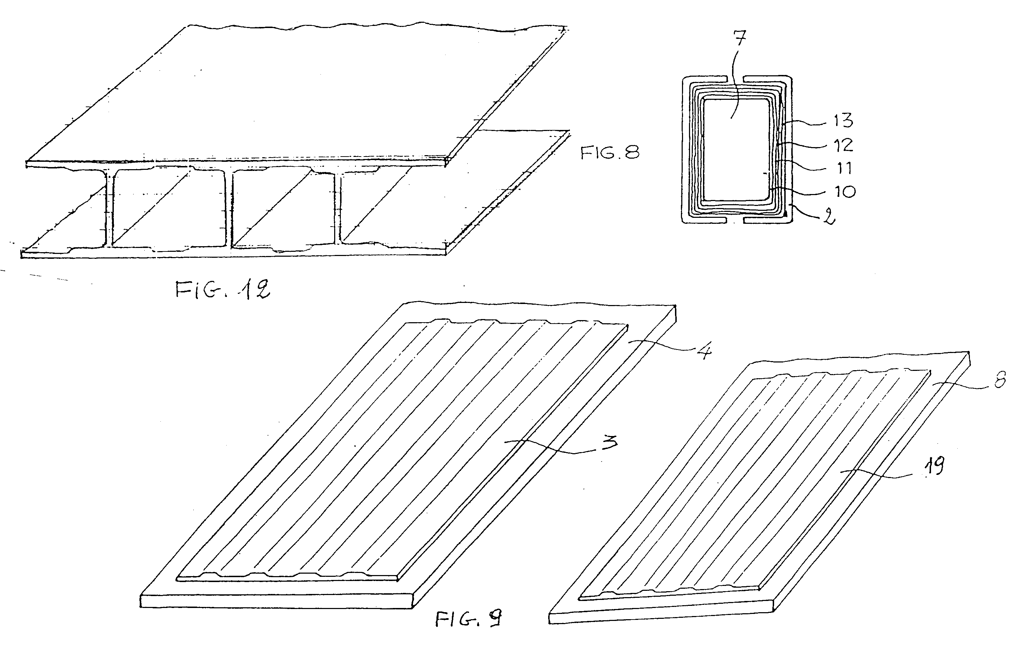

Fig. 8, which shows the section of the auxiliary supporting elements, with semi-spars in position, includes:
   2 pre-formed semi-spars;
   7 supporting elements;
   10 parting film;
   11 tubular bag;
   12 breathing material;
   13 parting film.

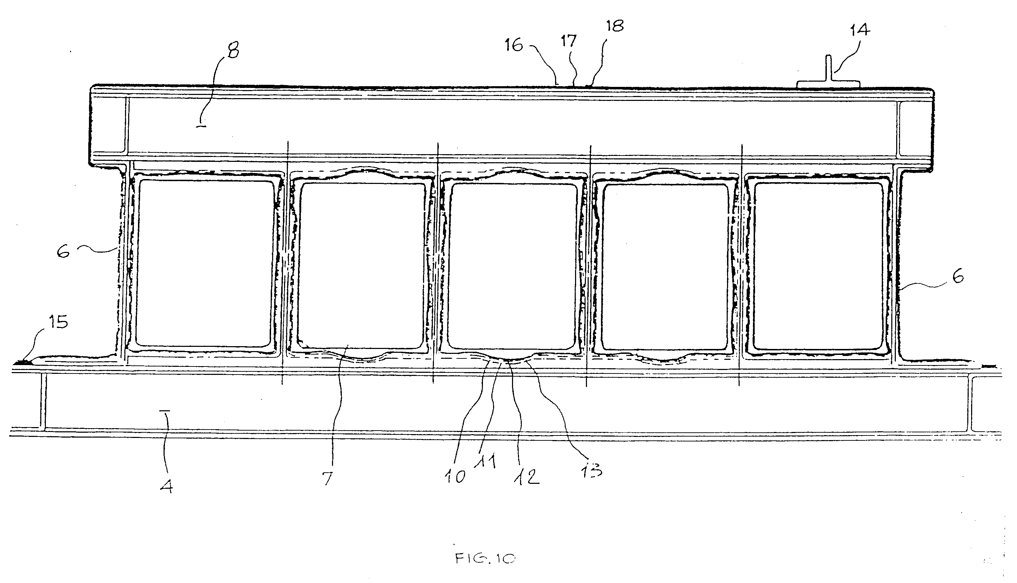

Fig. 9, which shows the closing plate of the forming tool, includes:
   3 lower closing skin of the integral structure;
   19 upper closing skin of the integral structure;
   4 lower plate of the forming tool;
   8 upper plate of the forming tool.
Fig. 10, which shows the final bag assembly, includes:
   4, 8 upper and lower plates;
   6 shoulders;
   7 supporting elements;
   16, 17, 18 elements of the external bag:
      - parting film 18,
      - breathing material 17,
      - film bag material 16,
      - vacuum valve 14,
      - sealing agent 15.

The invention will now be described for illustrative non limiting purposes with reference to the figures attached.

The manufacturing of boxed structures with strengthening elements in a single cycle requires the availability of the following materials, tools and facilities:
- a roll of pre-impregnated polymeric matrix material reinforced with fibres of various nature such as carbon, aramidic, glass and similar;
- auxiliary materials to build the vacuum bag;
- controlled environment in terms of
   temperature
   humidity
   dust content
- autoclave, consisting of a closed vessel where a temperature and pressure cycle can be performed.

We shall now describe the procedure, once again for illustrative non limiting purposes so as to represent the version presently preferred by the author.

In fact the system and procedure may be implemented by inverting some actions and/or materials without losing their initial characterisation.

Prepare the material by removing it from the refrigerator where it is kept at a low temperature, about -20 degrees C and leave it within the open till no more dew forms on the outer protective envelope, i.e. when it has reached ambient temperature.

Cut the impregnated material according to the directions and quantities required by the design.

The tools are prepared by applying a parting agent either as a film or spray film or teflon or other.

The procedure of interest consists of the following operations:
(a) Dress each auxiliary support 7 with a layer of separator 10 to facilitate its removal at a later date and then with a tubular bag 11 leaving about half a meter excess on each side for the sealing operation also to follow.
(b) Wrap each supporting element 7, over the tubular bag 11, with breathing material 12 and fix its ends with suitable sealant.
(c) Dress each supporting element 7, over separator 10, tubular bag 11, breathing material 12, with parting tubular film 13, leaving at least half a meter excess on each side for the next sealing operation.
(d) Seal the end of each tubular film using sealing agent 15 and apply a valve 14 to each end to create a vacuum.
(e) Apply a vacuum and wait for the tubular separator film 13 to tighten around supporting element 7.
(f) Over each of the supporting elements prepared according to steps (a) to (e) lay the preformed semi-spars of the entire structure (Fig. 12). Preforming consists in applying a vacuum and temperature so that the pre-impregnated material takes a predetermined shape without going through a polymerisation process.
(g) Onto each plate 4 and 8 which close the shaping tool, lay the layers of pre-impregnated material of the lower and upper skins 3 and 19.
(h) Set the supporting elements with related preformed spars onto the lower plate 4.
(i) Put the fillers 1 into position.
(j) On the top of the assembly, set the upper half shell 8 with its layers of pre-impregnated material 19.
(k) On top of all the above, lay the sheet separator agent 18 and breathing material 17.
(l) Over all the above, lay bag film 16 and seal the bag onto the base plate of the tool with sealant 15.
(m) Open the ends of each film of the tubular separator 13, cut the excess length with respect to the supporting element 7.
(n) Unwrap the ends of each of the tubes of tubular bag 11 and seal them at their ends with sealing agent 15.
(o) Prepare the envelope bag by sealing the edge of the outer bag film 16 onto the base plate 4, the edge of the bag film, also indicated by 16, with the ends of internal tubular sacs 11, the ends of the tubular sacs near to each other.
(p) Apply vacuum valves 14 in the required quantities.
(q) Apply the vacuum until the external bag film 16 tightens onto the outer surface of the forming tool made of elements 4, 6, 8.
(r) Open the ends of each of the tubular sacs 11.
(s) Continue to apply vacuum. Tubular sacs 11 will separate from supporting elements 7, minimising the volume closed in the envelope bag.
(t) Extract the supporting elements 7.
(u) Move the assembly to an autoclave or oven or other and apply the polymerisation process.

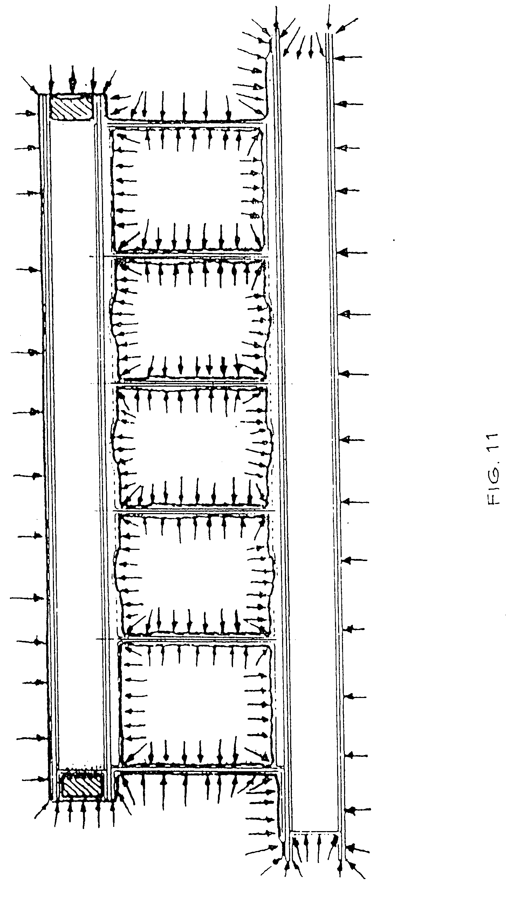

The procedure described till now and its related equipment serve to:
- position the preformed bars correctly and keep them in this position throughout the closing of the tool and the preparation of the envelope bag;
- during the polymerisation process, apply the compacting pressure uniformly over the surface of the component as shown in Fig. 11.

## Claims

1. Method for the manufacturing of integral monolithic structures, utilising a polymeric matrix material reinforced by fibres and pre-impregnated with thermosetting resins, wherein the layers of said material, separated by supporting elements, are positioned in a mould and enveloped in a bag to which a vacuum is applied,
charaterised by the fact that the structure is formed in a female mould closed at its lower, upper and lateral sides and that as supporting elements (7) rigid plugs are used which are extracted after having applied vacuum to the structure that is subsequently moved to the polymerisation process.

2. Method according to claim 1, characterised by the following operations:
(a) prepare the tools of the mould by applying a separator agent in the form of film, spray, teflon etc.,
(b) dress each of the supporting elements (7) with a layer of separating film (10) and then with a tubular bag (11) leaving an excess on each side;
(c) wrap each supporting element (7) over the tubular bag (11) with a breathing material (12) and fix its edges with an adhesive tape;
(d) dress each supporting element (7) with a tubular separating film (13) leaving an excess at each end;
(e) seal the end of each tubular film (13) using a sealing agent (15);
(f) apply a vacuum and wait for the tubular separating film (13) to tighten all above onto the supporting element (7);
(g) position preformed spars (2) on each supporting element prepared according to points (a) to (f), said spars acting as strengthening elements of the entire structure;
(h) position a layer of pre-impregnated material as upper skin (19) and lower skin (3) onto the upper plate (8) and lower plate (4) closing the forming tool;
(i) position the supporting elements (7) with related preformed semi-spars (2) onto the lower plate (4);
(k) position fillers (1);
(l) position the upper plate (8) on top of the assembly with related layers of preimpregnated skin (19);
(m) cover the entire assembly with separating film sheets (18) and with breathing material (17);
(m) cover the entire assembly with bag film (16) and seal the bag to the base plate (4) of the tool with sealing agent (15);
(o) open the ends of each of the separating film tubes (13) and cut the excess to the length of the supporting elements (7);
(p) unwrap the ends of the tubular bags (11) and seal them at their ends with sealing agent (15);
(q) form the envelope bag, sealing the edge of the outer bag (16) onto the base plate (4), the edge of the bag film (16) with the ends of the internal tubular bags (11), the tubular bag ends close to each other (11);
(r) apply a vacuum till the external bag material (16) tightens onto the external surface of the forming tool (4, 6, 8);
(s) open the ends of each of the tubular bags (11);
(t) extract the supporting elements (7);
(u) carry the assembly into an autoclave or oven and perform the polymerisation cycle.

3. Method according to claim 2, characterised in that at the beginning of the operations, the material is extracted from a refrigerator and cut according to the directions and quantities required by the design.

## Patentansprüche

1. Verfahren zur Herstellung von aus einem Stück bestehenden, monolithischen Strukturen unter Verwendung eines Materials mit Polymermatrix, die durch Fasern verstärkt und mit duroplastischen Kunststoffen vorimprägniert ist, wobei die aus diesem Material bestehenden Schichten, die durch tragende Elemente voneinander getrennt sind, in eine Form eingesetzt und mit einem Sack umhüllt werden, an den ein Vakuum angeschlossen wird, dadurch gekennzeichnet, daß die Struktur in einer Hohlform gebildet wird, die oben, unten und an den Seiten geschlossen ist, und daß als tragende Elemente (7) starre Kerne verwendet werden, die herausgezogen werden, nachdem das Vakuum auf die Struktur eingewirkt hat, welche anschließend zum Polymerisationsprozeß weitergeleitet wird.

2. Verfahren nach Anspruch 1, gekennzeichnet durch die folgenden Schritte:
(a) Vorbereiten der Werkzeuge der Form durch Aufbringen eines Trennmittels in Form eines Films, eines Sprays, Teflon oder dergleichen,
(b) Überziehen jedes tragenden Elementes (7) mit einer Schicht aus einem Trennfilm (10) und danach mit einem schlauchförmigen Sack (11), wobei an jeder Seite eine überstehende Länge belassen wird,
(c) Einhüllen jedes tragenden Elementes (7) über dem schlauchförmigen Sack (11) mit einem atmenden Material (12), dessen Enden mit einem Adhäsionsband befestigt werden,
(d) Überziehen jedes tragenden Elementes mit einem schlauchförmigen Trennfilm (13), wobei an jeder Seite eine überstehende Länge belassen wird,
(e) Versiegeln des Endes jedes schlauchförmigen Filmes (13) mit einem Abdichtmaterial (15),
(f) Aufbringen eines Unterdrucks und Warten, bis der schlauchförmige Trennfilm (13) alle Schichten gegen das tragene Element (7) drückt,
(g) Anlegen von vorgefertigten Holmen (2) gegen jedes nach den vorstehenden Punkten (a) bis (f) behandelte, tragende Element (7), wobei die Holme als Stützelemente der gesamten Struktur wirken,
(h) Aufbringen einer Schicht aus vorimprägniertem Material als obere Haut (19) und untere Haut (3) auf eine obere Platte (8) und eine untere Platte (4), welche die Form schließen,
(i) Auflegen der tragenden Elemente (7) mit den zugehörigen Halbholmen (2) auf die untere Platte (4),
(k) Einbringen von Füllern (1),
(l) Auflegen der oberen Platte (8) mit den entsprechenden Schichten aus der vorimprägnierten Haut (19) auf die Anordnung,
(m) Abdecken der gesamten Anordnung mit Trennfilmfolien (18) und mit atmendem Material (17),
(n) Abdecken der gesamten Anordnung mit einem Filmsack (16), der an der unteren Platte (4) des Werkzeugs mit einem Versiegelungsmittel (15) befestigt wird,
(o) Öffnen aller Trennfilmsäcke (13) an den Enden und Abschneiden der über die tragenden Elemente (7) vorstehenden Längen,
(p) Entfalten der Enden der schlauchförmigen Säcke (11) und Versiegelung ihrer Enden mit Dichtungsmittel (15),
(q) Bilden des Umhüllungssackes, Versiegeln der Kante des äußeren Sackes (16) an der unteren Platte (4), der Kante des Filmsackes (16) mit den Enden der schlauchförmigen, inneren Säcke (11) und der Enden der nebeneinander liegenden, schlauchförmigen Säcke (11) miteinander,
(r) Anlegen eines Unterdrucks, bis das Material des äußeren Sackes (16) eng auf der Außenseite des Formwerkzeugs (4, 5, 6, 8) anliegt,
(s) Öffnen der Enden jedes schlauchförmigen Sackes (11),
(t) Herausziehen der tragenden Elemente (7),
(u) Überführen der gesamten Anordnung in einen Autoklaven oder Ofen und Durchführen der Polymerisation.

3. Verfahren nach Anspruch 2, dadurch gekennzeichnet, daß zu Beginn der Operationen das Material aus einem Kühlraum entnommen und gemäß den durch den Entwurf vorgegebenen Richtungen und Mengen geschnitten wird.

## Revendications

1. Procéde pour la fabrication de structures monolithiques intégrales en utilisant un matériau à matrice polymérique renforcée par fibres et pré-imprégnée aux résines duroplastes, ledit matériau formant des couches qui sont séparées par des éléments portants et qui sont insérées dans un moule et recouvertes d'un sac dans lequel on fait le vide, caractérisé par le fait que ladite structure est formée dans un moule creux fermé en haut, en bas et sur les côtés, et par le fait que comme éléments portant on utilise des âmes rigides qui sont retirées quand le vide a été appliqué sur la structure qui ensuite est transférée vers un processus de polymérisation.

2. Procédé selon la revendication 1, caractérisé par les opérations suivantes :
(a) préparation des outils pour le moule en appliquant un agent séparateur sous forme d'un film, d'un spray, de téflon etc.,
(b) recouvrir les éléments portants (7) d'une couche d'un film séparateur (10) et ensuite d'un sac tubulaire (11) en laissant un excès de longueur de chaque côté ;
(c) entourer chaque élément portant (7), muni de son sac tubulaire (11), avec un tissu perméable à l'air (12) dont les extrémités sont fermées par un bande adhésive ;
(d) recouvrir chaque élément portant d'un film séparateur tubulaire (13) en laissant un excès de longueur de chaque côté;
(e) sceller l'extrémité de chaque film tubulaire (13) avec un matériau d'étanchéité (15) ;
(f) appliquer le vide et attendre que le film séparateur tubulaire (13) presse toutes les couches contre l'élément portant ;
(g) positionner des longerons préfabriqués (2) contre chaque élément portant préparé selon les points (a) à (f), lesdits longerons servant à soutenir la structure complète ;
(h) positionner une couche d'un matériau pré-imprégné comme peau supérieure (19) et comme peau inférieure (3) contre une plaque supérieure (8) et une plaque inférieure (4) destinées à fermer le moule ;
(i) positionner les éléments portants (7) munis de leurs deux demi-longerons sur la plaque inférieure (4) ;
(k) positionner des éléments de remplissage (1) ;
(l) positionner la plaque supérieure (8) munie de ses couches de peau pré-imprégnée (19) sur l'ensemble ;
(m) couvrir l'ensemble avec des feuilles (18) de film séparateur et d'un matériau perméable à l'air (17) ;
(n) couvrir l'ensemble d'un sac mince (16) lequel est fixé à la plaque inférieure (4) de l'outil par un matériau de scellement (15) ;
(o) ouvrir les extrémités de tous les sacs (13) de film séparateur et couper les extrémités dépassant les éléments portants (7) ;
(p) déplier les extrémités des sacs tubulaires (11) et les fermer avec un matériau d'étanchéité (15) ;
(q) former le sac d'enveloppement, en fixant le bord du sac mince extérieur (16) sur la plaque inférieure (4), le bord du sac mince (16) sur les extrémités des sacs tubulaires intérieurs (11) et les extrémités du sac tubulaire l'une sur l'autre ;
(r) appliquer le vide jusqu'à ce que le matériau du sac extérieur (16) soit pressé contre la surface extérieure de l'outil de moulage (4, 6, 8) ;
(s) ouvrir les extrémités de chaque sac tubulaire (11) ;
(t) extraire les éléments portants (7) ;
(u) transférer l'ensemble dans un autoclave ou un four pour effectuer le cycle de polymérisation.

3. Procédé selon la revendication 2, caratérisé par le fait qu'au début des opérations le matériau est retiré d'un réfrigérateur et coupé dans les sens et les quantités requises par le projet.
